# EUROPEAN PATENT SPECIFICATION

(11) **EP 1 911 629 B1**
(45) Date of publication and mention of the grant of the patent: **02.12.2009**
(21) Application number: 06781559.7
(22) Date of filing: 25.07.2006
(51) Int. Cl.: B60R 11/02

(54) **OPERATION DEVICE FOR VEHICLE**
BETÄTIGUNGSVORRICHTUNG FÜR FAHRZEUG
DISPOSITIF OPÉRATIONNEL DESTINÉ À UN VÉHICULE

(30) Priority: 29.07.2005 JP 2005220642
(43) Date of publication of application: 16.04.2008
(73) Proprietor: HONDA MOTOR CO., LTD., Tokyo 107-8556 (JP)
(72) Inventor: YAMADA, Hajime c/o HONDA R & D CO., LTD.,, Saitama 3510193 (JP)
(74) Representative: Trossin, Hans-Jürgen
(86) International application number: PCT/JP2006/314647
(87) International publication number: WO 2007/013442

(56) References cited:
- EP-A- 0 946 028
- EP-A- 1 343 113
- DE-A1- 10 012 753
- DE-A1- 10 139 694
- DE-A1- 10 253 462
- JP-A- 10 050 178
- JP-A- 10 241 501
- JP-A- 11 067 017
- JP-A- 2000 149 719
- JP-A- 2000 149 719
- JP-A- 2000 149 721
- JP-A- 2001 291 456
- JP-A- 2002 002 416
- JP-A- 2004 026 050
- JP-A- 2004 299 539
- JP-A- 2005 001 587
- JP-A- 2005 138 662
- US-A1- 2004 164 963

## Description

### TECHNICAL FIELD

The present invention relates to an operation device for a vehicle that includes a monitor for displaying operation menus and functions related to in-vehicle equipment installed in the vehicle, and selection/execution means for selecting any one of the operation menus displayed on the monitor and selecting and executing any one of the functions displayed on the monitor.

### BACKGROUND ART

An arrangement is known from JP-A- 2004-157944 in which operation of in-vehicle equipment such as a navigation system, an air conditioning system, or an audio system is commanded by moving a pointer to a predetermined position on a screen of a monitor, wherein a steering wheel is provided with an operating knob capable of moving in directions in two dimensions and capable of a switching operation by being pushed down, and the pointer is moved by the operating knob so as to select a function.
In JP 2000-149719 A on which the preamble of claim 1 is based, the switches 111, 112, 113 in Figure 7 do not project forwardly of the device 110 but stay within the front boundary of the device 110.
JP 2000-149721 shows a switch 36 projecting sidewardly of the body of knob 15.

### DISCLOSURE OF INVENTION

### PROBLEMS TO BE SOLVED BY THE INVENTION

In the arrangement disclosed in Patent Publication above, a switching operation is carried out by pushing down the operating knob, and since the role of the switching operation is limited to selection of an item that is indicated by the pointer on the screen (so-called execution switching), the operation of commanding a large number of operations to various types of in-vehicle equipment is cumbersome and time-consuming, which is a problem.

The present invention has been accomplished in the light of the above circumstances, and it is an object thereof to carry out the commanding of a large number of operations to in-vehicle equipment installed in a vehicle simply and in a short time.

### MEANS FOR SOLVING THE PROBLEMS

In order to attain the above object, according to a first aspect of the present invention, there is proposed an operation device for a vehicle in accordance with claim 1.
The operation device comprises a monitor for displaying operation menus and functions related to in-vehicle equipment installed in the vehicle, and selection/execution means for selecting any one of the operation menus displayed on the monitor and selecting and executing any one of the functions displayed on the monitor. The selection/execution means comprises an operating knob and a plurality of operation switches provided on the operating knob, and selection of an operation menu and selection/execution of a function are commanded by a combination of operation of the operating knob and operation of the operation switches.

Further, according to a second aspect of the present invention, in addition to the first aspect, there is proposed the operation device for a vehicle, wherein the operating knob is disposed in an intermediate position between left and right occupants, and the operation switches are disposed symmetrically relative to the operating knob.

Further, according to a third aspect of the present invention, in addition to the first or second aspect, there is proposed the operation device for a vehicle, wherein the operation switches comprise a scroll switch, an execution switch, and a cancel switch.

Further, according to a fourth aspect of the present invention, in addition to the third aspect, there is proposed the operation device for a vehicle, wherein the scroll switch and the execution switch are disposed at positions that enable operation by a fingertip of a hand gripping the operating knob.

Further, according to a fifth aspect of the present invention, in addition to the third aspect, there is proposed the operation device for a vehicle, wherein by operating at least two of the scroll switch, the execution switch, and the cancel switch at the same time, a function is exhibited that is different from functions exhibited when they are operated individually.

Further, according to a sixth aspect of the present invention, in addition to the third aspect, there is proposed the operation device for a vehicle, wherein both switching among a hierarchy of functions of the in-vehicle equipment and returning to an initial screen can be executed by operation of the cancel switch.

Further, according to a seventh aspect of the present invention, in addition to the sixth aspect, there is proposed the operation device for a vehicle, wherein selection between switching among the hierarchy of functions of the in-vehicle equipment and returning to the initial screen is carried out based on a length of time the cancel switch is operated.

### EFFECTS OF THE INVENTION

In accordance with the first aspect of the present invention, since the selection/execution means for selecting any one of the operation menus related to in-vehicle equipment displayed on the monitor and selecting and executing any one of the functions related to the in-vehicle equipment is formed from an operating knob and a plurality of operation switches provided thereon, and selection of an operation menu and selection/execution of a function are commanded by a combination of operation of the operating knob and operation of the plurality of switches, selection from a large number of operation menus and selection/execution of the function can be commanded simply and in a short time merely by operation with one hand without detaching the hand from the operating knob, thus improving the operability.

In accordance with the second aspect of the present invention, since the operating knob is disposed at an intermediate position between left and right occupants, and the operation switches are disposed symmetrically relative to the operating knob, the left and right occupants can operate the operating knob and the operation switches in the same manner.

In accordance with the third aspect of the present invention, since the operation switch is formed from a scroll switch, an execution switch, and a cancel switch, scrolling of a screen of the monitor can be carried out by the scroll switch, selection/execution of a function displayed on the monitor can be carried out by the execution switch, and returning to a function in a hierarchy displayed on the monitor can be carried out by the cancel switch.

In accordance with the fourth aspect of the present invention, the scroll switch and the execution switch are disposed at positions that enable operation by the fingertip of the hand gripping the operating knob, thus making the switching operation easy.

In accordance with the fifth aspect of the present invention, when at least two of the scroll switch, the execution switch, and the cancel switch are operated at the same time, a function different from those when they are operated individually is exhibited, thus enabling the number of switches to be minimized.

In accordance with the sixth aspect of the present invention, since both switching among the hierarchy of functions of the in-vehicle equipment and returning to the initial screen can be executed by operation of the cancel switch, the number of switches can be minimized.

In accordance with the seventh aspect of the present invention, since selection between switching among the hierarchy of functions of the in-vehicle equipment and returning to the initial screen is carried out based on a length of time the cancel switch is operated, it is easy to select one of switching among the hierarchy of functions of the in-vehicle equipment and returning to the initial screen.

### BRIEF DESCRIPTION OF DRAWINGS

[FIG. 1] FIG. 1 is a perspective view of a vehicle compartment front part of a motor vehicle (first embodiment).
[FIG. 2] FIG. 2 is an enlarged view from the direction of arrow 2 in FIG. 1 (first embodiment).
[FIG. 3] FIG. 3 is a view from the direction of arrow 3 in FIG. 2 (first embodiment).
[FIG. 4] FIG. 4 is a view from the direction of arrow 4 in FIG. 2 (first embodiment).
[FIG. 5] FIG. 5 is a sectional view along line 5-5 in FIG. 4 (first embodiment).
[FIG. 6] FIG. 6 is a sectional view along line 6-6 in FIG. 5 (first embodiment).
[FIG. 7] FIG. 7 is a sectional view along line 7-7 in FIG. 5 (first embodiment).
[FIG. 8] FIG. 8 is a sectional view along line 8-8 in FIG. 5 (first embodiment).
[FIG. 9] FIG. 9 is a sectional view along line 9-9 in FIG. 5 (first embodiment).
[FIG. 10] FIG. 10 is a view, corresponding to FIG. 9, showing a modified example of a guide groove (first embodiment).
[FIG. 11] FIG. 11 is a graph showing the relationship between tilt angle and load of an operating knob (first embodiment).
[FIG. 12] FIG. 12 is a diagram for explaining the functions of a main switch and a sub switch (first embodiment).
[FIG. 13] FIG. 13 is a view, corresponding to FIG. 2, of a second embodiment (second embodiment).
[FIG. 14] FIG. 14 is a view from the direction of arrow 14 in FIG. 13 (second embodiment).
[FIG. 15] FIG. 15 is a sectional view along line 15-15 in FIG. 13 (second embodiment).
[FIG. 16] FIG. 16 is a perspective view of a main switch and a sliding member (second embodiment).

### EXPLANATION OF REFERENCE NUMERALS AND SYMBOLS

- 30: Operating knob
- 31: Main switch (operation swithch)
- 32: Sub switch (operation switch, cancel switch)
- 33: Scroll switch
- 34: Execution switch

### BEST MODE FOR CARRYING OUT THE INVENTION

Modes for carrying out the present invention are explained below by reference to embodiments of the present invention shown in the attached drawings.

### EMBODIMENT 1

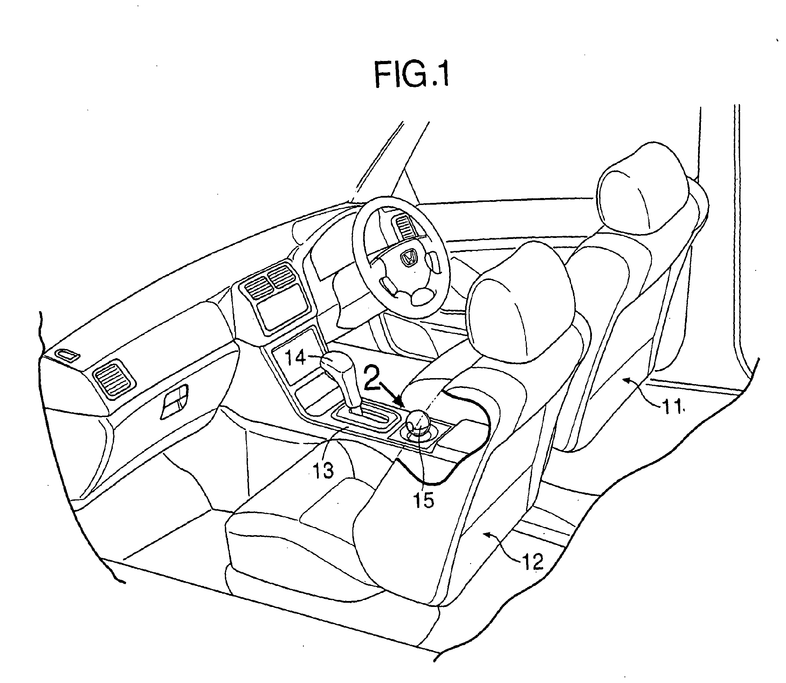

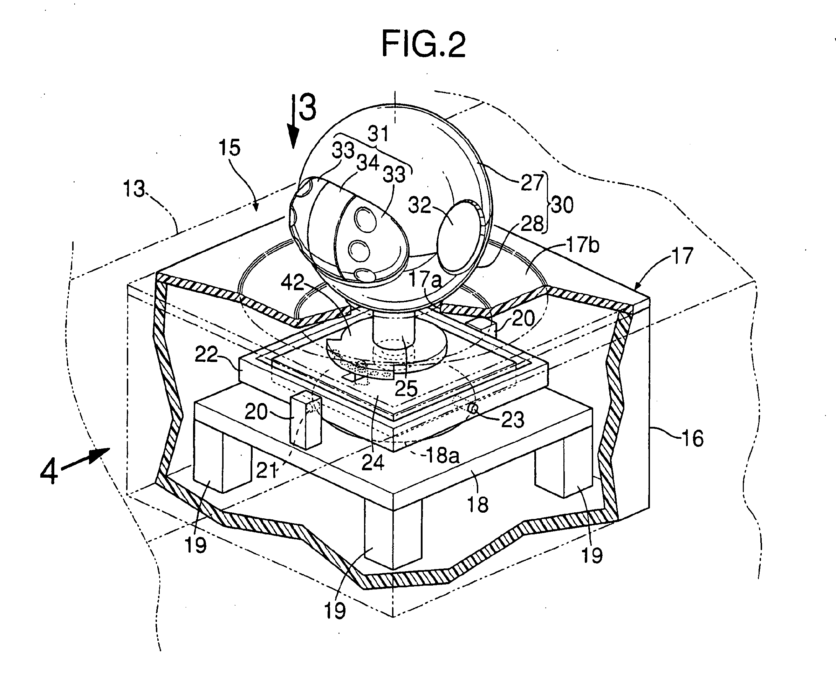

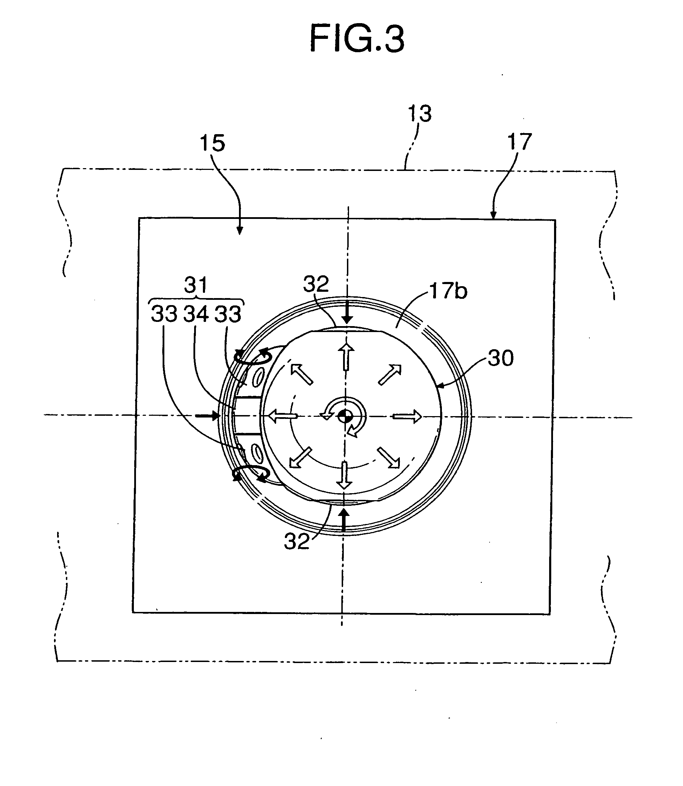

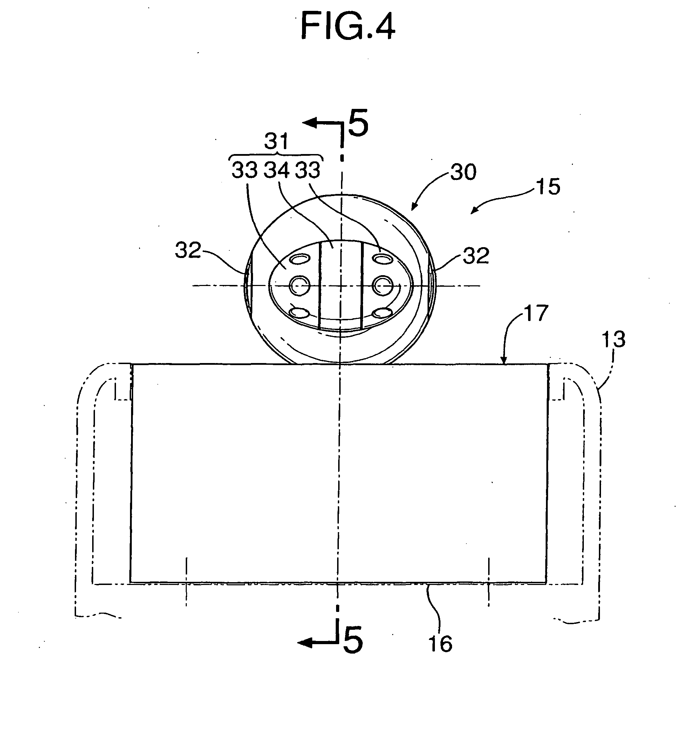

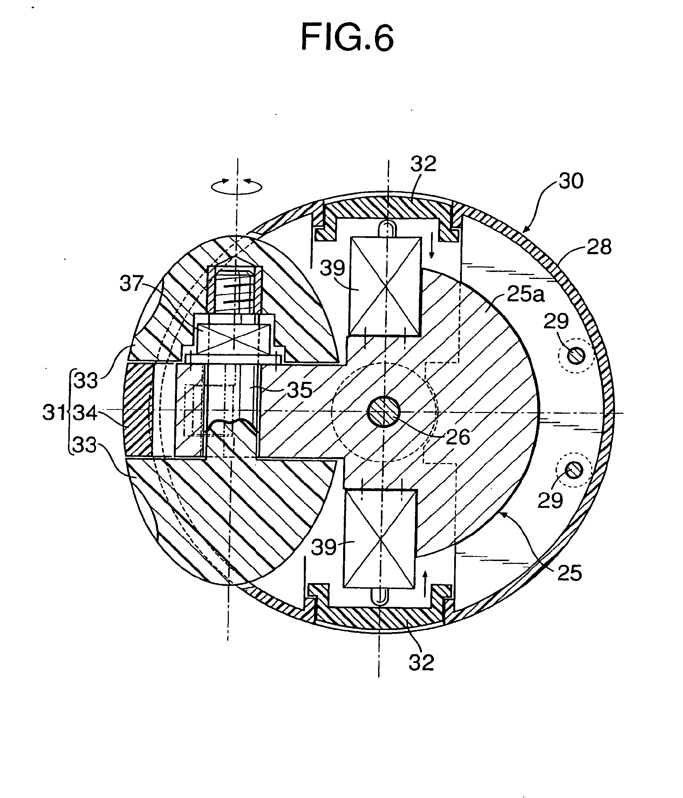

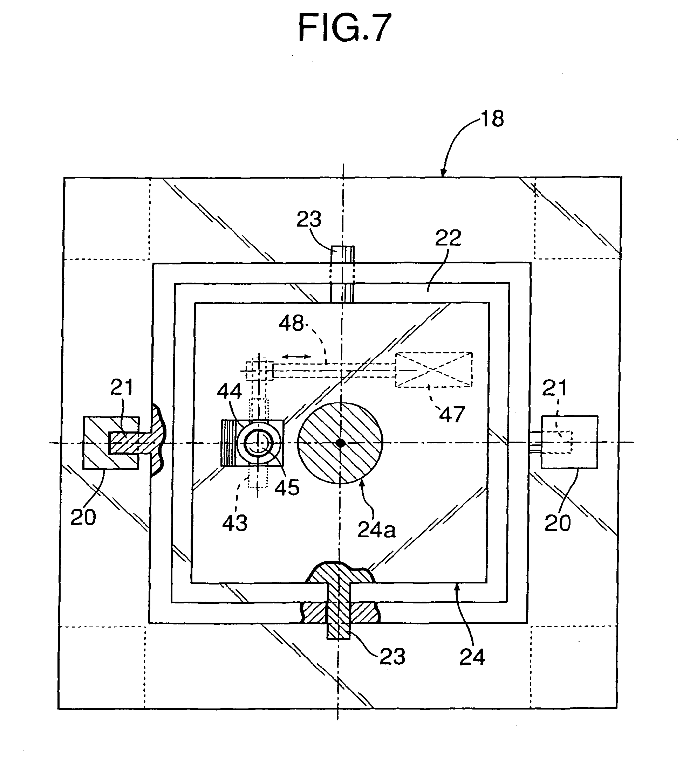

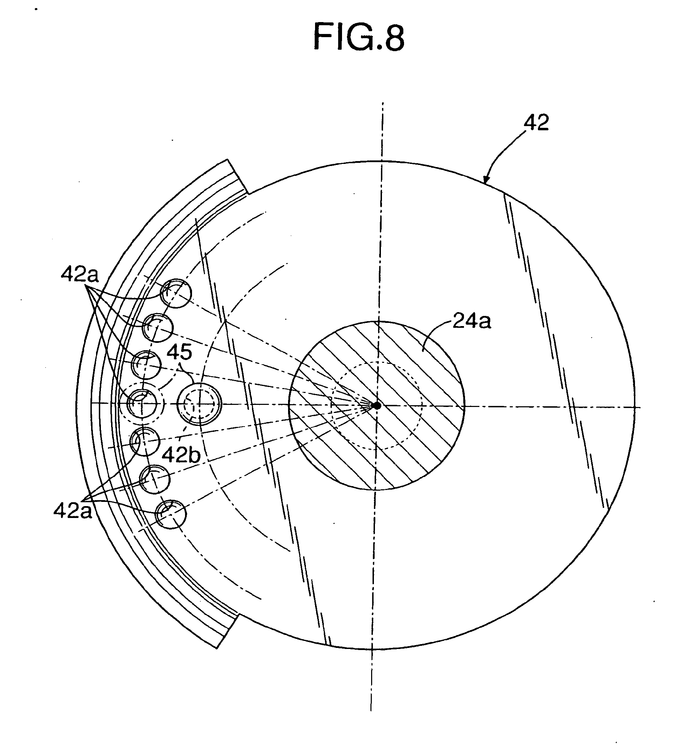

FIG. 1 to FIG. 12 show a first embodiment of the present invention.

As shown in FIG. 1, a shift lever 14 is disposed on an upper face of a center console 13 extending in the fore-and-aft direction between a driver's seat 11 and a passenger seat 12 of a passenger vehicle, and an interface device 15 is disposed to the rear of the shift lever 14.

As shown in FIG. 1 to FIG. 9, the interface device 15 includes a box-shaped casing 16 and a cover 17 covering an upper face of the casing 16, and a base plate 18 is supported within the casing 16 via four support legs 19. A frame-shaped outer gimbal 22 is supported, via pins 21 and 21, so that it can swing in the left-and-right direction between a pair of front and rear support posts 20 and 20 uprightly provided on an upper face of the base plate 18, and a plate-shaped inner gimbal 24 is supported, via a pair of left and right pins 23 and 23, so that it can swing in the fore-and-aft direction within the outer gimbal 22. The inner gimbal 24 can therefore swing in fore-and-aft and left-and-right directions relative to the base plate 18.

An upper support shaft 24a and a lower support shaft 24b project vertically from the center of the inner gimbal 24, and the inner periphery of the lower end of a rotary shaft 25 is rotatably fitted around the outer periphery of the upper end of the upper support shaft 24a and retained by a bolt 26. The upper half of the rotary shaft 25 runs through an opening 17a formed in the cover 17 and projects upward. An upper knob half 27 and a lower knob half 28 are fitted together so as to sandwich from above and below a projection 25a projecting rearward from the upper end of the rotary shaft 25 and are integrally tightened together via bolts 29 and 29. The upper knob half 27 and the lower knob half 28 form in cooperation with each other a spherical operating knob 30, and since this operating knob 30 is connected to the base plate 18 via the rotary shaft 25, it can tilt in fore-and-aft and left-and-right directions together with the base plate 18.

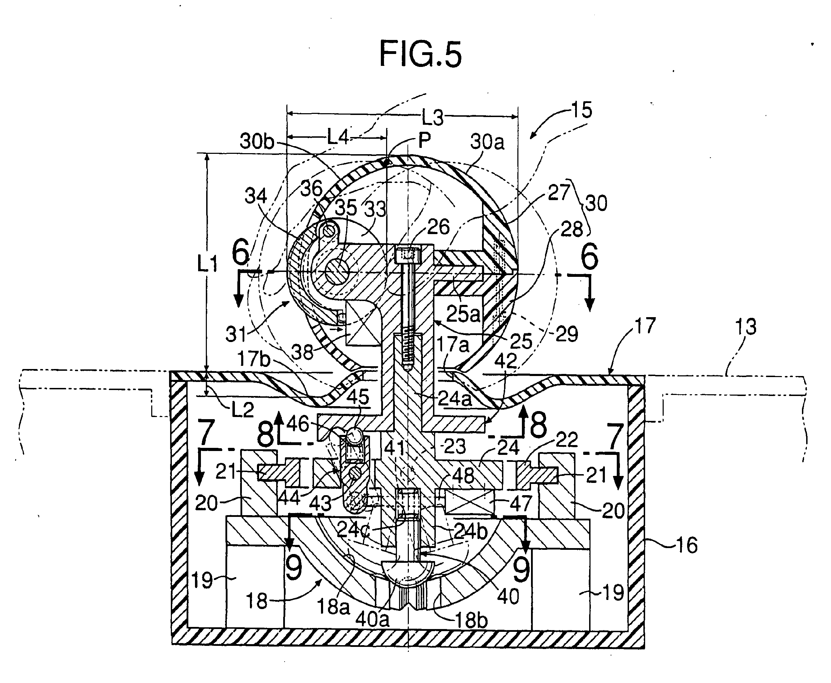

In this embodiment, the operating knob 30 has a diameter of 80 mm, and employing this dimension enables the operating knob 30 to be easily gripped by a person's hand. Furthermore, the operating knob 30 includes a palm rest portion 30a on the rear side and a finger rest portion 30b on the front side, and the border between the palm rest portion 30a and the finger rest portion 30b is at point P in FIG. 5. This point P is a portion corresponding to base parts of an index finger and a middle finger when the operating knob 30 is gripped naturally.

A main switch 31 is provided on the front face of the operating knob 30, and a pair of sub switches 32 and 32 are provided on opposite side faces on the left and right of the operating knob 30. The main switch 31 is formed from a scroll switch 33 and an execution switch 34, the scroll switch 33, which is divided into left and right portions, is capable of rotating around a support shaft 35 supported at the front end of the rotary shaft 25, and the execution switch 34, which is sandwiched by the divided scroll switch 33, is capable of swinging rearward around a support shaft 36 disposed above the support shaft 35 of the scroll switch 33. The rotational angle of the scroll switch 33 is detected by a rotary encoder 37 provided between the support shaft 35 and the rotary shaft 25, and operation of the execution switch 34 is detected by a switching element 38 provided on the rotary shaft 25. The left and right sub switches 32 and 32 mainly exhibit the function of a cancel switch, and operation thereof is detected by switching elements 39 and 39 provided on the rotary shaft 25.

A partially spherical recess 18a is formed in a middle part of the base plate 18, and a star-shaped guide groove 18b extending radially in eight directions is formed in the recess 18a. A sliding member 40 is housed in a hollow portion 24c formed in the interior of the lower support shaft 24b of the inner gimbal 24, and the sliding member 40 is urged downward by means of a spring 41 so that a hemispherical sliding portion 40a formed at the lower end of the sliding member 40 abuts against the guide groove 18b.

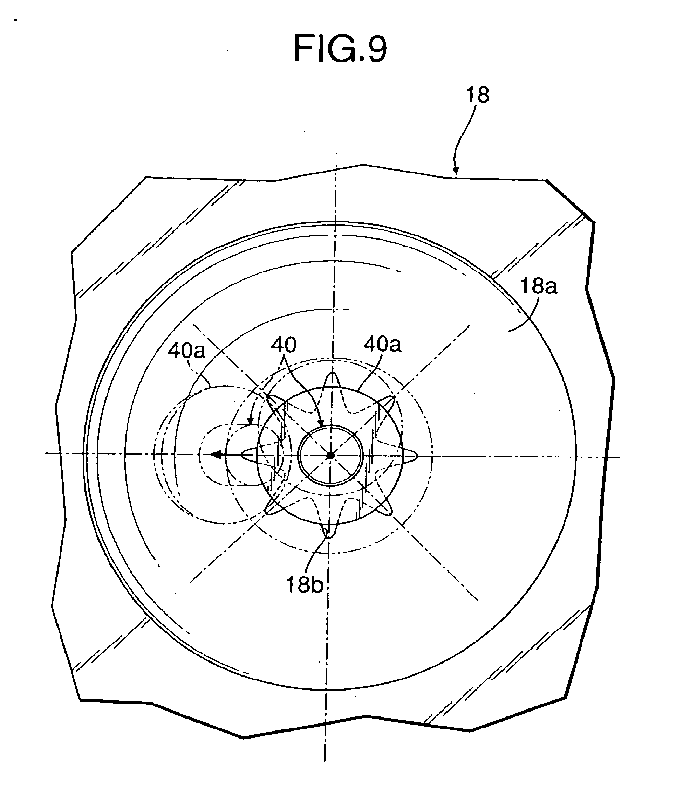

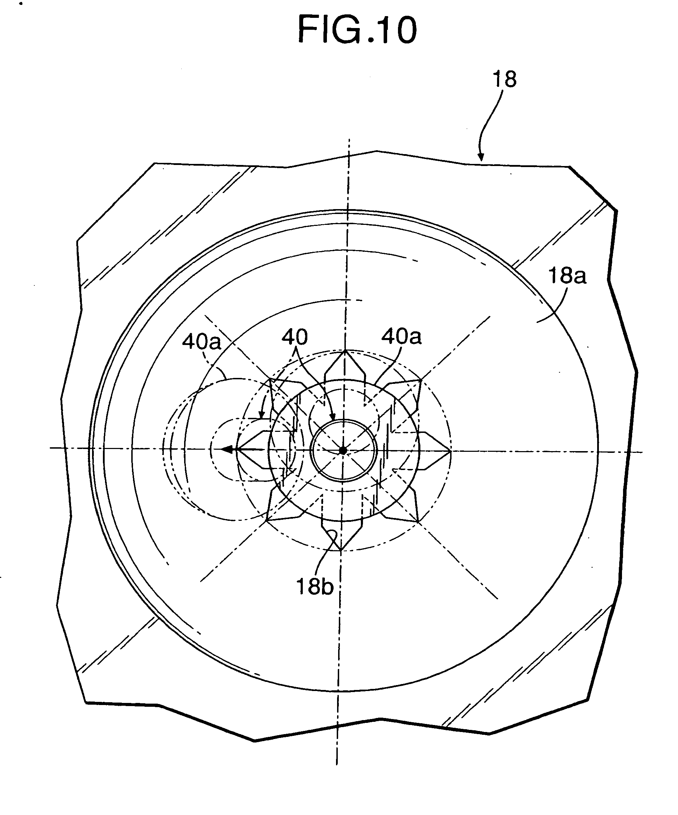

The shape of each groove of the guide groove 18b is simply tapered from radially inside to outside in the first embodiment shown in FIG. 9, and in a modified example shown in FIG. 10 it first has a fixed width and is then tapered from radially inside to outside.

A disk-shaped click plate 42 is formed integrally with the lower end of the rotary shaft 25, seven click holes 42a are formed in the lower face of the click plate 42 on a circumference with the rotary shaft 25 as the center, and one click hole 42b is formed radially inside the seven click holes 42a. A middle section of a ball holder 44 is pivotably supported on the inner gimbal 24 via a support shaft 43, and a ball 45 housed within the ball holder 44 is urged by means of a spring 46 so that it can fit into any of the click holes 42a and 42b. A solenoid 47 supported on a lower face of the inner gimbal 24 is connected to the lower end of the ball holder 44 by means of a rod 48, and making the ball holder 44 swing around the support shaft 43 by making the solenoid 47 expand and contract enables the ball 45 to move between a radially outside position in which it fits into the click holes 42a and a radially inside position in which it fits into the click hole 42b. The rotational angle of the rotary shaft 25 relative to the inner gimbal 24 is detected by a rotary encoder 49.

The operation of the first embodiment having the above-mentioned arrangement is now explained.

The operating knob 30 is capable of tilting in eight directions, that is, forward, rearward, rightward, leftward, right-forward, left-forward, right-rearward, and left-rearward, these eight directions corresponding to the directions in which the guide groove 18b of the recess 18a of the base member 18 shown in FIG. 9 and FIG. 10 extends. That is, when the operating knob 30 tiltably supported via the outer gimbal 22 and the inner gimbal 24 is in a neutral position, the sliding portion 40a of the sliding member 40 made to project downward from the lower support shaft 24b integral with the operating knob 24 by the resilient force of the spring 41 engages with the center of the star-shaped guide groove 18b in a stable manner, thereby holding the operating knob 30 in the neutral position. Furthermore, when the operating knob 30 is released from the hand when in a tilted position, it is returned to the neutral position by return means (not illustrated).

From this state, tilting the operating knob 30 in one direction among the eight directions allows the sliding portion 40a of the sliding member 40 to be guided along the tapered guide groove 18b from radially inside to outside; as the groove width of the guide groove 18b decreases, the sliding member 40 is pushed into the hollow portion 24c of the lower support shaft 24b against the resilient force of the spring 41, and a predetermined load is produced in tilting the operating knob 30.

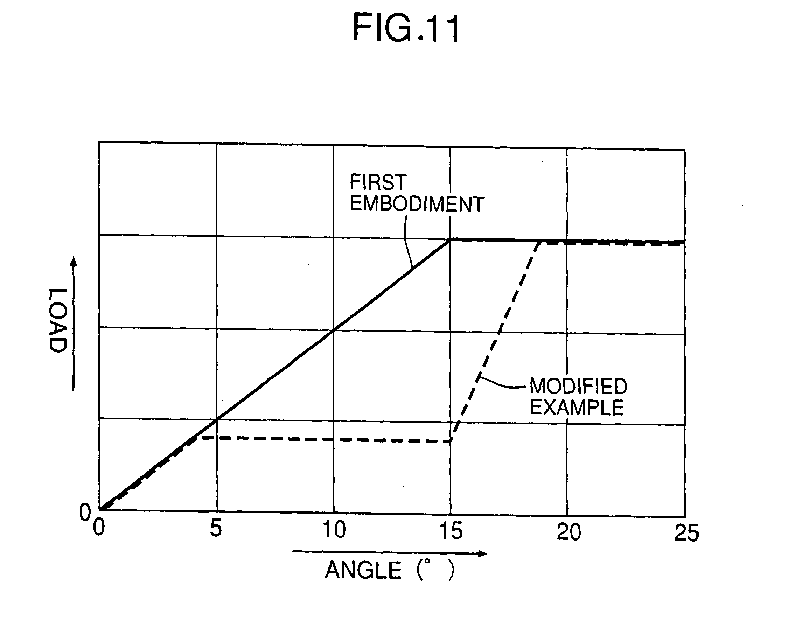

The solid line in FIG. 11 corresponds to the guide groove 18b (first embodiment) in FIG. 9; as the tilt angle of the operating knob 30 increases the load increases linearly, and when the sliding portion 40a rides past the guide groove 18b the load attains a fixed value.

The broken line in FIG. 11 corresponds to the guide groove 18b in FIG. 10 (modified example of the first embodiment); the load increases linearly as the tilt angle of the operating knob 30 increases until the sliding portion 40a engages with the parallel portion of the guide groove 18b, the load is then held at a fixed value while the sliding portion 40a slides against the parallel portion of the guide groove 18b, the load increases linearly while the sliding portion 40a slides against the tapered portion of the guide groove 18b, and the load attains a fixed value when the sliding portion 40a rides past the guide groove 18b.

In this way, restraint is given to tilting of the operating knob 30 in accordance with the shape of the guide groove 18b, thus enhancing the operational feel, and even when the operating knob 30 is operated in a direction that deviates from the eight directions, the operating knob 30 can be guided in the correct direction by the effect of the guide groove 18b.

In this way, tilting the operating knob 30 in the eight directions allows contacts, which are not illustrated, to be closed, thus outputting a signal corresponding to the tilt direction to control means.

Furthermore, rotating the operating knob 30 left or right allows the rotary shaft 25, which is integral with the operating knob 30, to rotate relative to the upper support shaft 24a, and the click plate 42, which is integral with the rotary shaft 25, to rotate relative to the inner gimbal 24. When the solenoid 47 is expanded by the operation of a switch (not illustrated) and the ball holder 44 swings to a position in the clockwise direction in FIG. 5, the position of the ball 45 moves radially inward, and the ball 45 accordingly fits into the one click hole 42b, which is on the radially inner side of the click plate 42, thus stably holding the operating knob 30 in a neutral position in a pivoting direction. When the operating knob 30 is rotated in a left or right direction from this state, since a load occurs as the ball 45 is detached from the click hole 42b against the resilient force of the spring 46, restraint can be given to pivoting of the operating knob 30 from the neutral position.

Furthermore, when the solenoid 47 is contacted by the operation of a switch (not illustrated) and the ball holder 44 swings to a position in the anticlockwise direction in FIG. 5, the position of the ball 45 moves radially outward, and the ball 45 accordingly fits into any of the seven click holes 42a, which are present on the radially outer side of the click plate 42, thus stably holding the operating knob 30 in seven positions in the pivoting direction. When the operating knob 30 is rotated in a left or right direction, since a load occurs as the ball 45 is detached from the click hole 42a against the resilient force of the spring 46, restraint can be given to pivoting of the operating knob 30.

In this way, when the operating knob 30 pivots, the rotary encoder 49 outputs a signal corresponding to the pivot position to a control device. Positional limits of the pivoting angle of the operating knob 30 are 25° for each of left and right relative to the neutral position, and when the operating knob 30 is released from the hand after being operated it is automatically returned to the neutral position by return means (not illustrated). Since the range through which the operating knob 30 can pivot is limited to 25° for each of left and right relative to the neutral position, an occupant can operate the operating knob 30 without changing grip, thus improving the operability.

When the occupant grips the operating knob 30, the palm is supported on the palm rest portion 30a of the operating knob 30, and the middle finger and the index finger are supported on the finger rest portion 30b, which is in front of the palm rest portion 30a. Since, in this state, the tips of the middle finger and the index finger abut against the main switch 31, a rotation operation of the scroll switch 33 and a pushing down operation of the execution switch 34 can be carried out smoothly, and a pushing down operation of the left and right sub switches 32 and 32 can be carried out smoothly by the thumb and the third finger.

As is clear from FIG. 5, a recess 17b for ensuring that there is a space around the opening 17a of the cover 17 is formed so that, when the operating knob 30 is gripped and tilted, a finger tip is not caught between the lower end of the operating knob 30 and the cover 17. When the vertical height of the operating knob 30 is L1, and the height between the lower end of the operating knob 30 and the deepest part of the recess 17b is L2, L1 > L2 holds. It is thus possible to prevent the operating knob 30 from greatly projecting from the cover 17 and prevent it from interfering with operation of the shift lever 14.

Furthermore, when the fore-and-aft length of the operating knob 30, including the main switch 31, is L3, and the fore-and-aft length of the finger rest portion 30b (= diameter of main switch 31) is L4, the right-hand end part of L4 in FIG. 5 being, for example, although not shown, the branching point of the index finger and the middle finger as a reference point, the relationship L3 > 2 × L4 between L3 and L4 holds. As a result, not only can the palm be supported stably by ensuring that the dimensions of the palm rest portion 30a of the operating knob 30 are sufficient, but it is also possible to operate the main switch 31 (in particular, the scroll switch 34) smoothly.

As described above, since the main switch 31 and the sub switches 32 and 32 are provided on the operating knob 30, which outputs a signal by tilting in the eight directions and pivoting around its own axis within the range of 25° to each of the left and right, it is possible to output a large number of commands by a combination of a signal due to the attitude (position) of the operating knob 30 and a signal due to the operation of the main switch 31 and the sub switches 32 and 32. Furthermore, since the main switch 31 and the sub switches 32 and 32 are provided on the operating knob 30, when the operating knob 30 is gripped, the fingertips naturally reach the main switch 31 and the sub switches 32 and 32, and the main switch 31 and the sub switches 32 and 32 can be operated easily without searching for their positions, thus reliably preventing the occurrence of an erroneous operation.

The functions of the interface device 15 are now explained.

The interface device 15 controls a plurality of systems such as a navigation system, an audio system, and an air conditioning system through a monitor screen by a combination of operations of the operating knob 30, the main switch 31, and the sub switches 32 and 32.

In the main switch 31, a menu screen is called from an initial screen by pushing down the execution switch 34, and a decision is made by selecting an item by rotation of the scroll switch 33 and pushing down the execution switch 34. The sub switches 32 and 32 sequentially switch between menu screens; when shifted to a lower level screen, they function as a cancel switch, and when shifted through multiple stages of lower level screens, they function as a cancel switch for returning directly to the menu screen by a long push.

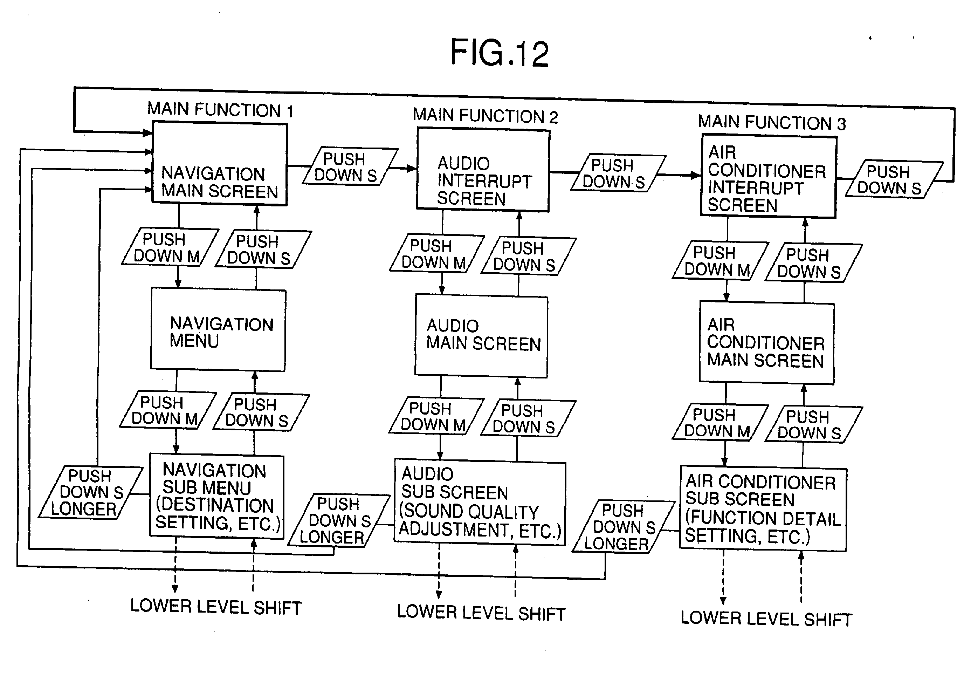

To explain in more detail, as shown in FIG. 12, when the main switch 31 (execution switch 34) is pushed down on the initial screen of the monitor, the uppermost level screen (navigation main screen) of the navigation system is displayed, and when the sub switches 32 and 32 are pushed down, uppermost level screen of navigation system → uppermost level screen (audio interrupt screen) of audio system → uppermost level screen (air conditioner interrupt screen) of air conditioning system are displayed in sequence.

Furthermore, when the main switch 31 is pushed down on the uppermost level screen (navigation main screen) of the navigation system, a second level screen (navigation menu screen) of the navigation system is displayed, and when the main switch 31 is pushed down again, a third level screen (navigation sub menu screen) of the navigation system is displayed.

Moreover, when the main switch 31 is pushed down on the uppermost level screen (audio interrupt screen) of the audio system, a second level screen (audio main screen) of the audio system is displayed, and when the main switch 31 is pushed down again, a third level screen (audio sub screen) of the audio system is displayed.

Furthermore, when the main switch 31 is pushed down on the uppermost level screen (air conditioner interrupt screen) of the air conditioning system, a second level screen (air conditioner main screen) of the air conditioning system is displayed, and when the main switch 31 is pushed down again, a third level screen (air conditioner sub screen) of the air conditioning system is displayed.

If, on the other hand, instead of the main switch 31, the sub switches 32 and 32 are pushed down, a lower level screen is switched to an upper level screen each time, and the uppermost level screen is finally returned to. Furthermore, when the sub switches 32 and 32 are pushed down for a longer time (at least 2 sec), the uppermost level screen is returned to directly from a lower level screen. In this way, since two types of function are exhibited depending on the duration for which the sub switches 32 and 32 are pushed down, it is possible to suppress an increase in the number of switches, thus enhancing the operability.

Moreover, by operating the main switch 31 and the sub switches 32 and 32 at the same time, the following various functions may be exhibited without increasing the number of switches unnecessarily.

When pushing down of the main switch 31 (execution switch 34) and pushing down of the sub switches 32 and 32 are carried out at the same time:
Example 1: single function allocation
   · In each screen operation, a particularly often used function is freely assigned.
   · In a map screen, a subject vehicle position-up display and a north-up display are switched over.
Example 2: menu calling
   · A menu other than a normal menu is called.
   · In a map function screen, a freely customizable menu is called.
   · In an audio screen, a function setting screen is called.

When rotation of the main switch 31 (scroll switch 33) and pushing down of the sub switches 32 and 32 are carried out at the same time:
Example 1: shortcut allocation
   · A specific single function, low in a hierarchy, requiring a selection operation is called directly.
   · In any screen, a telephone directory (requiring a selection operation) is called directly.
Example 2: analogue quantitative operation
   · In each screen operation, a particularly often used function is freely assigned.
   · In a map screen, angle adjustment is carried out, and in an air conditioner screen, air flow adjustment, etc. is carried out.

Furthermore, a tilting operation of the operating knob 30 in the eight directions is utilized for scrolling of the navigation screen in a given direction, changing a source in the audio screen, or switching functions in the air conditioner screen, and a pivoting operation of the operating knob 30 is utilized for sound volume adjustment in the navigation screen or the audio screen, temperature adjustment or air flow adjustment in the air conditioner screen, etc.

### EMBODIMENT 2

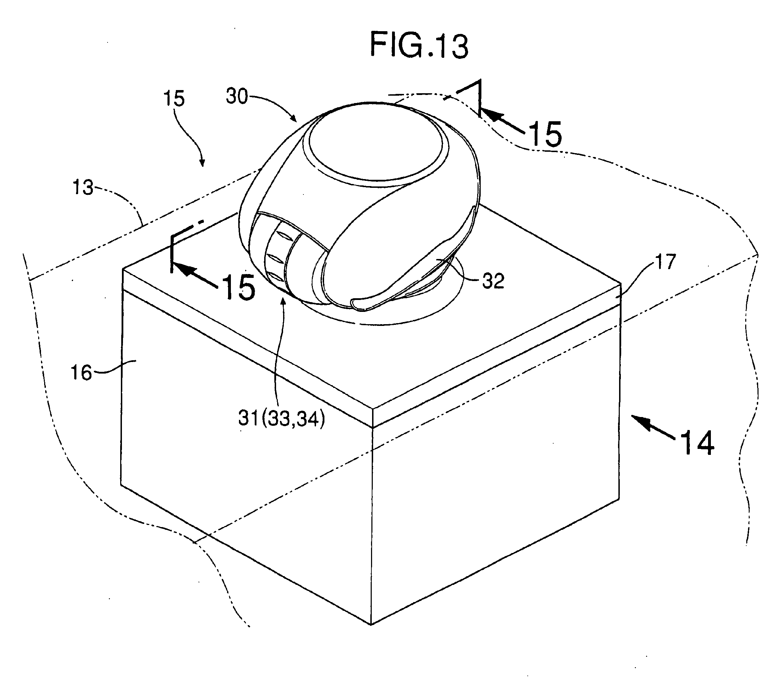

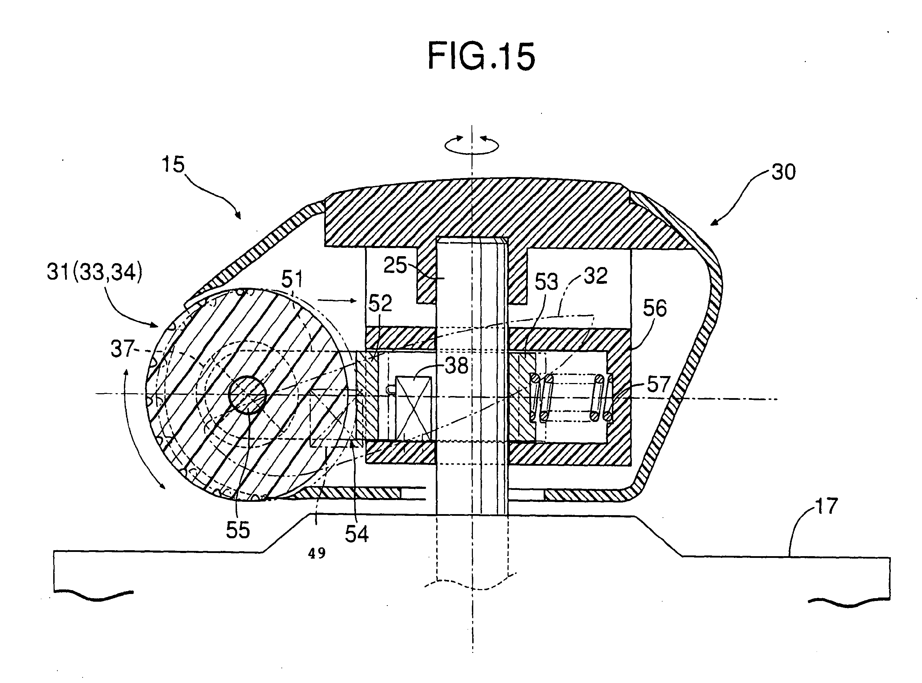

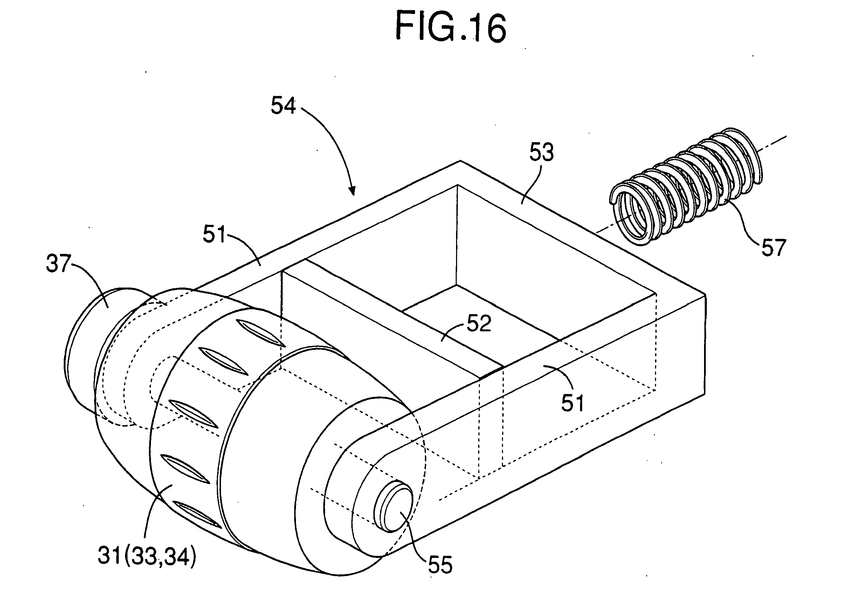

FIG. 13 to FIG. 16 show a second embodiment of the present invention. In the second embodiment, members corresponding to the members of the first embodiment are denoted by the same reference numerals and symbols as those of the first embodiment, and duplication of the explanation is thus avoided.

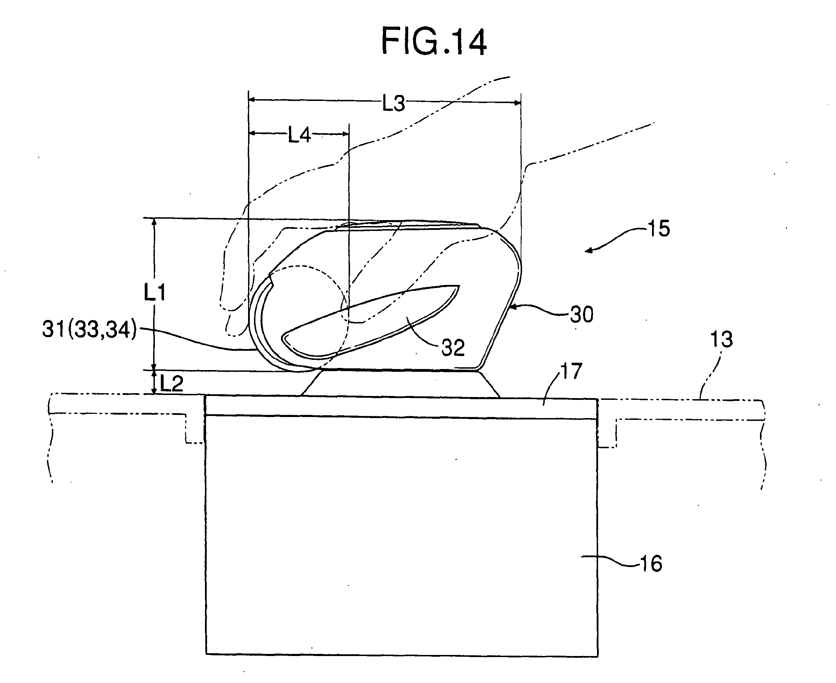

The operating knob 30 of the first embodiment is substantially spherical, but an operating knob 30 of the second embodiment has a vertically flattened shape. The dimension of the operating knob 30 in the fore-and-aft direction is 80 mm as in the first embodiment. When the vertical height of the operating knob 30 is L1, and the height between the lower end of the operating knob 30 and an upper face of a cover 17 is L2, L1 > L2 holds. Furthermore, when the fore-and-aft length of the operating knob 30, including a main switch 31, is L3, and the fore-and-aft length of a finger rest portion 30b is L4, the right-hand end part of L4 in FIG. 14 being, for example, although not shown, the branching point of the index finger and the middle finger as a reference point, the relationship L3 > 2 × L4 between L3 and L4 holds. The relationships between these dimensions L1 to L4 are the same as in the first embodiment.

The second embodiment is different from the first embodiment in terms of the shape of the operating knob 30 as well as in terms of the structure of the main switch 31. With regard to the main switch 31 of the first embodiment, the scroll switch 33 rotates in place, and the execution switch 34 is pushed down separately from the scroll switch 33, but with regard to the main switch 31 of the second embodiment, a scroll switch 33 and an execution switch 34 rotate integrally and are pushed down integrally.

That is, the second embodiment includes a sliding member 54 in which a pair of side members 51 and 51 are connected by a front cross member 52 and a rear cross member 53, the main switch 31 is rotatably supported between the side members 51 and 51 at the front end of the sliding member 54 by a support shaft 55, and rotation of the support shaft 55 is detected by a rotary encoder 49. The sliding member 54 is supported so that it can slide in the fore-and-aft direction on a slide guide 56 formed within the operating knob 30, a spring 57 urging the sliding member 54 forward is disposed between the rear cross member 53 of the sliding member 54 and the rear end of the slide guide 56, and a switching element 38 is provided on the slide guide 56 so as to face a rear face of the front cross member 52. Other than the above, the structure of the second embodiment is the same as that of the first embodiment.

When the main switch 31 is rotated, its rotational angle is detected by the rotary encoder 49; pushing down the main switch 31 moves the sliding member 54 back along the slide guide 56, the front cross member 52 pushes the switching element 38, and the pushing down of the main switch 31 is detected.

In accordance with this second embodiment, the same effects as those of the first embodiment described above can be attained.

Embodiments of the present invention are explained above, but the present invention may be modified in a variety of ways as long as the modifications do not depart from the scope of the present invention as defined by the appendent claims.

For example, the operation switches of the embodiments are the main switch 31 (the scroll switch 33, the execution switch 34) and the sub switch 32 (the cancel switch), but the number and type of operation switches are not limited to those of the embodiments.

## Claims

1. An operation device for a vehicle comprising a monitor for displaying operation menus and functions related to in-vehicle equipment installed in the vehicle, and selection/execution means (15) for selecting any one of the operation menus displayed on the monitor and selecting and
executing any one of the functions displayed on the monitor,
wherein the selection/execution means (15) comprises an operating knob (30) and a plurality of operation switches (31, 32) provided on the operating knob (30), and selection of an operation menu and selection/execution of a function are commanded by a combination of operation of the operating knob (30) and operation of the operation switches (31, 32),
**characterized in that** at least one (31) of the operation switches is mounted on a front of the operating knob (30) in an advancing direction of the vehicle so as to project forwardly of the operating knob (30).

2. The operation device for a vehicle according to Claim 1, wherein the operating knob (30) is disposed in an intermediate position between left and right occupants, and the operation switches (31, 32) are disposed symmetrically relative to the operating knob (30).

3. The operation device for a vehicle according to Claim 1 or Claim 2,
wherein the operation switches (31, 32) comprise a scroll switch (33), an execution switch (34), and a cancel switch (32).

4. The operation device for a vehicle according to Claim 3, wherein the scroll switch (33) and the execution switch (34) are disposed at positions that enable operation by a fingertip of a hand gripping the operating knob (30).

5. The operation device for a vehicle according to Claim 3, wherein by operating at least two of the scroll switch (33), the execution switch (34), and the cancel switch (32) at the same time, a function is exhibited that is different from functions exhibited when they are operated individually.

6. The operation device for a vehicle according to Claim 3, wherein both switching among a hierarchy of functions of the in-vehicle equipment and returning to an initial screen can be executed by operation of the cancel switch (32).

7. The operation device for a vehicle according to Claim 6, wherein selection between switching among the hierarchy of functions of the in-vehicle equipment and returning to the initial screen is carried out based on a length of time the cancel switch (32) is operated.

8. The operation device for a vehicle according to any of Claims 1 to 7,
wherein the switch (31) on the front in the advancing direction of the vehicle includes a scroll switch (33) rotating around a horizontal support shaft (35, 55).

9. The operation device for a vehicle according to Claim 8, wherein the switch (31) on the front in the advancing direction of the vehicle includes a switch (34) functioning by a pushing down operation.

10. The operation device for a vehicle according to Claim 9, wherein the switch (34) functioning by a pushing down operation is provided for operating independent of the scroll switch (33).

11. The operation device for a vehicle according to Claim 9 or Claim 10,
wherein the scroll switch (33) is respectively mounted on opposite sides of the switch (34) functioning by a pushing down operation.

12. The operation device for a vehicle according to Claim 9, wherein the scroll switch (33) is mounted integrally with the switch (34) functioning by a pushing down operation.

13. The operation device for a vehicle according to Claim 3, wherein the scroll switch (33) is divided into left and right portions and is capable of rotating around a support shaft (35) supported at the front end of a rotary shaft (25), and the execution switch (34) is sandwiched by the left and right scroll switch portions (33) and is capable of swinging rearward around a support shaft (36) disposed above the support shaft (35) of the scroll switch (33).

## Patentansprüche

1. Bedienungsvorrichtung für ein Fahrzeug, umfassend: einen Monitor zum Anzeigen von Bedienungsmenüs und Funktionen in Bezug auf in dem Fahrzeug installierte Fahrzeugausstattung, und Wähl-/Ausführungsmittel (15) zum Auswählen eines von auf dem Monitor angezeigten Bedienungsmenüs und zum Auswählen und Ausführen einer der auf dem Monitor angezeigten Funktionen,
worin das Wähl-/Ausführungsmittel (15) einen Bedienungsknopf (30) und eine Mehrzahl von an dem Bedienungsknopf (30) vorgesehenen Bedienungsschaltern (31, 32) aufweist, und die Auswahl eines Bedienungsmenüs und die Auswahl/Ausführung einer Funktion durch eine Kombination der Bedienung des Bedienungsknopfs (30) und der Bedienung der Bedienungsschalter (31, 32) befohlen werden,
**dadurch gekennzeichnet, dass** zumindest einer (31) der Bedienungsschalter in Fahrtrichtung des Fahrzeugs an einer Vorderseite des Bedienungsknopfs (30) angebracht ist, so dass er zur Vorderseite des Bedienungsknopfs (30) weist.

2. Die Bedienungsvorrichtung für ein Fahrzeug nach Anspruch 1, worin der Bedienungsknopf (30) in einer Zwischenposition zwischen linken und rechten Insassen angeordnet ist, und die Bedienungsschalter (31, 32) relativ zum Bedienungsknopf (30) symmetrisch angeordnet sind.

3. Die Bedienungsvorrichtung für ein Fahrzeug nach Anspruch 1 oder Anspruch 2, worin die Bedienungsschalter (31, 32) einen Scrollschalter (33), einen Ausführungsschalter (34) und einen Löschschalter (32) aufweisen.

4. Die Bedienungsvorrichtung für ein Fahrzeug nach Anspruch 3, worin der Scrollschalter (33) und der Ausführungsschalter (34) an Positionen angeordnet sind, die die Bedienung mit einer Fingerspitze einer den Bedienungsknopf (30) ergreifenden Hand ermöglichen.

5. Die Bedienungsvorrichtung für ein Fahrzeug nach Anspruch 3, worin durch gleichzeitige Bedienung von zumindest zweien des Scrollschalters (33), des Ausführungsschalters (34) und des Löschschalters (32) eine Funktion vorgelegt wird, die sich von Funktionen unterscheidet, die vorgelegt werden, wenn sie einzeln bedient werden.

6. Die Bedienungsvorrichtung für ein Fahrzeug nach Anspruch 3, worin sowohl das Schalten unter einer Hierarchie von Funktionen in der Fahrzeugausstattung als auch die Rückkehr zu einem Anfangsbildschirm durch Bedienung des Löschschalters (32) ausgeführt werden können.

7. Die Bedienungsvorrichtung für ein Fahrzeug nach Anspruch 6, worin die Auswahl zwischen dem Schalten unter der Hierarchie von Funktionen in der Fahrzeugausstattung und der Rückkehr zum Anfangsbildschirm basierend auf einer Zeitdauer, mit der der Löschschalter (32) betätigt wird, ausgeführt wird.

8. Die Bedienungsvorrichtung für ein Fahrzeug nach einem der Ansprüche 1 bis 7, worin der in Fahrtrichtung des Fahrzeugs vorne liegende Schalter (31) einen Scrollschalter (33) enthält, der sich um eine horizontale Lagerwelle (35, 55) herum dreht.

9. Die Bedienungsvorrichtung für ein Fahrzeug nach Anspruch 8, worin der in der Fahrtrichtung des Fahrzeugs vorne liegende Schalter (31) einen Schalter (34) enthält, der durch Drückbetätigung funktioniert.

10. Die Bedienungsvorrichtung für ein Fahrzeug nach Anspruch 9, worin der durch Drückbetätigung funktionierende Schalter (34) zur Bedienung unabhängig des Scrollschalters (33) vorgesehen ist.

11. Die Bedienungsvorrichtung für ein Fahrzeug nach Anspruch 9 oder Anspruch 10, worin der Scrollschalter (33) jeweils an gegengesetzten Seiten des durch Drückbedienung funktionierenden Schalters (34) angebracht ist.

12. Die Bedienungsvorrichtung für ein Fahrzeug nach Anspruch 9, worin der Scrollschalter (33) integral mit dem durch Drückbetätigung funktionierenden Schalter (34) angebracht ist.

13. Die Bedienungsvorrichtung für ein Fahrzeug nach Anspruch 3, worin der Scrollschalter in linke und rechte Abschnitte unterteilt ist und um eine am Vorderende einer Drehwelle (25) gelagerten Lagerwelle (35) herum drehbar ist, und der Ausführungsschalter (34) zwischen den linken und rechten Scrollschalterabschnitten (33) aufgenommen ist und um eine Lagerwelle (36), die über der Lagerwelle (35) des Scrollschalters (33) angeordnet ist, herum nach hinten schwenkbar ist.

## Revendications

1. Dispositif opérationnel destiné à un véhicule comprenant un écran pour afficher des menus et des fonctions opérationnels relatifs à un équipement intérieur au véhicule installé dans le véhicule, et des moyens de sélection / exécution (15) pour sélectionner l'un quelconque des menus opérationnels affichés sur l'écran et sélectionner et exécuter l'une quelconque des fonctions affichées sur l'écran, dans lequel les moyens de sélection /exécution (15) comprennent un bouton fonctionnel (30) et une pluralité de commutateurs opérationnels (31, 32) prévus sur le bouton opérationnel (30), et une sélection d'un menu opérationnel et une sélection /exécution d'une fonction sont commandées par une combinaison d'opérations du bouton opérationnel (30) et d'opérations des commutateurs opérationnels (31, 32), **caractérisé en ce qu'**au moins un (31) des commutateurs opérationnels est monté sur l'avant du bouton opérationnel (30) dans un sens d'avancement du véhicule de manière à faire saillie en avant du bouton opérationnel (30).

2. Dispositif opérationnel destiné à un véhicule selon la revendication 1, dans lequel le bouton opérationnel (30) est disposé dans une position intermédiaire entre des occupants gauche et droit, et les commutateurs opérationnels (31, 32) sont disposés symétriquement par rapport au bouton opérationnel (30).

3. Dispositif opérationnel destiné à un véhicule selon la revendication 1 ou la revendication 2, dans lequel les commutateurs opérationnels (31, 32) comprennent un commutateur de défilement (33), un commutateur d'exécution (34), et un commutateur d'annulation (32).

4. Dispositif opérationnel destiné à un véhicule selon la revendication 3, dans lequel le commutateur de défilement (33) et le commutateur d'exécution (34) sont disposés à des positions permettant un fonctionnement avec un bout de doigt d'une main saisissant le bouton de fonctionnement (30).

5. Dispositif opérationnel destiné à un véhicule selon la revendication 3 dans lequel en faisant fonctionner au moins deux du commutateur de défilement (33), du commutateur d'exécution (34), et du commutateur d'annulation (32) au même moment, une fonction est présentée qui est différente des fonctions présentées lorsqu'ils sont actionnés individuellement.

6. Dispositif opérationnel destiné à un véhicule selon la revendication 3, dans lequel non seulement une commutation parmi une hiérarchie des fonctions de l'équipement intérieur au véhicule mais encore un retour à l'écran initial peuvent être exécutés par l'actionnement du commutateur d'annulation (32).

7. Dispositif opérationnel destiné à un véhicule selon la revendication 6, dans lequel la sélection entre une commutation parmi la hiérarchie des fonctions de l'équipement intérieur au véhicule et un retour à l'écran initial est effectuée en étant basée sur une durée durant laquelle le commutateur d'annulation (32) est actionné.

8. Dispositif opérationnel destiné à un véhicule selon l'une quelconque des revendications 1 à 7, dans lequel le commutateur (31) à l'avant dans le sens d'avancement du véhicule comprend un commutateur de défilement (33) tournant autour d'une tige formant support horizontale (35, 55).

9. Dispositif opérationnel destiné à un véhicule selon la revendication 8, dans lequel le commutateur (31) à l'avant dans le sens d'avancement du véhicule comprend un commutateur (34) fonctionnant par une opération de poussée vers le bas.

10. Dispositif opérationnel destiné à un véhicule selon la revendication 9, dans lequel le commutateur (34) fonctionnant par une opération de poussée vers le bas est prévu pour fonctionner indépendamment du commutateur de défilement (33).

11. Dispositif opérationnel destiné à un véhicule selon la revendication 9 ou la revendication 10, dans lequel le commutateur de défilement (33) est monté respectivement sur des côtés opposés du commutateur (34) fonctionnant par une opération de poussée vers le bas.

12. Dispositif opérationnel destiné à un véhicule selon la revendication 9, dans lequel le commutateur de défilement (33) est monté en une seule pièce avec le commutateur (34) fonctionnant par une opération de poussée vers le bas.

13. Dispositif opérationnel destiné à un véhicule selon la revendication 3, dans lequel le commutateur de défilement (33) est divisé en portions gauche et droite et est capable de tourner autour d'une tige formant support (35) supportée à l'extrémité avant d'une tige rotative (25), et le commutateur d'exécution (34) est pris en sandwich par les portions gauche et droite du commutateur de défilement (33) et est capable de basculer en arrière autour d'une tige formant support (36) disposée au-dessus de la tige formant support (35) du commutateur de défilement (33).
